# FASCICULE DE BREVET EUROPEEN

(11) **EP 4 323 686 B1**
(45) Date de publication et mention de la délivrance du brevet: **30.07.2025**
(21) Numéro de dépôt: 22719554.2
(22) Date de dépôt: 30.03.2022
(51) Int. Cl.: F17C 7/04

(54) **DISPOSITIF DE STOCKAGE ET DE FOURNITURE DE FLUIDE ET VÉHICULE, VÉHICULE ET PROCÉDÉ COMPORTANT UN TEL DISPOSITIF**
FLUIDSPEICHER- UND -VERSORGUNGSVORRICHTUNG UND FAHRZEUG UND VERFAHREN MIT SOLCH EINER VORRICHTUNG
FLUID STORAGE AND SUPPLY DEVICE, AND VEHICLE AND METHOD COMPRISING SUCH A DEVICE

(30) Priorité: 13.04.2021 FR 2103776
(43) Date de publication de la demande: 21.02.2024
(73) Titulaire: L'AIR LIQUIDE, Société Anonyme pour l'Etude et l'Exploitation des Procédés Georges Claude, 75007 Paris (FR)
(72) Inventeur: ALLIDIERES, Laurent, 75321 PARIS (FR)
(74) Mandataire: Air Liquide
(86) Numéro de dépôt international: PCT/EP2022/058396
(87) Numéro de publication internationale: WO 2022/218704

(56) Documents cités:
- EP-A1- 2 813 746
- EP-B1- 1 521 933
- FR-A1- 2 706 822
- US-A- 5 644 921
- US-A1- 2009 288 426
- US-A1- 2015 072 260
- US-A1- 2018 306 383
- US-B2- 9 746 132

## Description

L'invention concerne un dispositif de stockage et de fourniture de fluide, un véhicule et un procédé comportant un tel dispositif.

L'invention concerne plus particulièrement un dispositif de stockage et de fourniture de fluide, notamment dispositif embarqué de stockage et de fourniture d'hydrogène à un organe utilisateur, comprenant un réservoir cryogénique de stockage de fluide liquéfié, un circuit de soutirage comprenant une première conduite de soutirage ayant une première extrémité amont reliée à la partie supérieure du réservoir et une seconde extrémité aval destinée à être reliée à un organe utilisateur, la première conduite de soutirage comprenant un premier échangeur de chaleur de réchauffage situé en dehors du réservoir et un second échangeur de chaleur de réchauffage situé à l'intérieur du réservoir, le circuit de soutirage comprenant un ensemble de vanne(s) configuré pour assurer le passage d'un flux de fluide circulant de la première extrémité vers la seconde extrémité en passant dans le premier échangeur de chaleur puis dans le second échangeur de chaleur ou en passant uniquement dans le premier échangeur de chaleur sans passer dans le second échangeur de chaleur.

Un tel dispositif est par exemple décrit dans le document DE4329566A, mais également dans FR2706822A1.

Le stockage d'hydrogène embarqué à bord de véhicules alimentés en carburant hydrogène utilise de l'hydrogène gazeux comprimé ou sous forme liquide.

Si les capacités stockées nécessaires sont supérieures à 50 kg, le stockage embarqué sous forme liquide est privilégié. L'hydrogène liquide est généralement stocké dans un réservoir à basse pression (inférieure à 13 bar abs). À l'équilibre, la température de l'hydrogène est fixée par la pression du réservoir via la courbe de saturation entre la phase liquide et la phase gazeuse. Ceci est valable jusqu'au point critique de l'hydrogène, à une pression légèrement inférieure à 13 bar abs.

L'hydrogène liquide est généralement produit à une pression proche de la pression atmosphérique, généralement entre 1,15 et 1,3 bar abs, correspondant à une température comprise entre 20,8K et 21,2 K. Il est transporté et transféré dans le réservoir embarqué à l'aide de camions cryogéniques et station de remplissage. Le transport et le transfert étant source d'entrées thermique, la température de l'hydrogène dans le réservoir correspond à une pression de saturation de l'ordre de 2 bar abs, soit 22,9K.

Les piles à combustible (ou éventuellement moteurs à combustion interne fonctionnant à hydrogène « ICE ») fonctionnent en général à une pression inférieure à 2 bar abs au niveau du cœur de la cellule. Cependant, pour diverses raisons opératoires, la plupart des fabricants exigent une pression d'interface avec le réservoir qui est comprise entre 3 et 7 bar abs.

Le réservoir plein étant initialement à une pression inférieure, il est alors nécessaire d'augmenter sa pression jusqu'à une pression supérieure à celle de la pile à combustible (ICE) et de contrôler cette pression au fur et à mesure de la consommation de gaz. Il est donc nécessaire d'inclure dans le réservoir un moyen de contrôler sa pression.

Le document précité prévoit un apport de gaz sous pression dans le réservoir. Ceci complexifie l'installation. Ce mode de contrôle n'est pas utilisé dans l'industrie également du fait des quantités de gaz importantes nécessaires.

Une autre solution consiste à utiliser une épingle chauffante électrique localisée préférablement dans la phase liquide du réservoir et configurée pour évaporer du liquide pour augmenter la pression du réservoir. Cette option a l'avantage d'être simple à mettre en œuvre mais les inconvénients majeurs d'être très difficile à réparer en cas de panne (accès au réservoir) et de consommer une partie de la puissance électrique de la pile.

Un but de la présente invention est de pallier tout ou partie des inconvénients de l'art antérieur relevés ci-dessus.

A cette fin, le dispositif selon l'invention, par ailleurs conforme à la définition générique qu'en donne le préambule ci-dessus, est essentiellement caractérisé en ce que le dispositif comprend en outre un système de pressurisation du réservoir comprenant une conduite de pressurisation distincte du circuit de soutirage et comprenant deux extrémités reliées respectivement aux parties supérieure et inférieure du réservoir, un échangeur de chaleur de vaporisation et un ensemble de vanne(s) configuré pour permettre le soutirage de liquide du réservoir, son réchauffage dans l'échangeur de chaleur de vaporisation et sa réintroduction dans le réservoir.

Par ailleurs, des modes de réalisation de l'invention peuvent comporter l'une ou plusieurs des caractéristiques suivantes :
- l'ensemble de vanne(s) comprend une vanne à trois voies reliées respectivement à une sortie du premier échangeur de chaleur, à une entrée du second échangeur de chaleur et à la seconde extrémité via une portion du circuit de soutirage de bypass du second échangeur de chaleur
- le circuit de soutirage comporte un troisième échangeur de chaleur disposé en série en aval du second échangeur de chaleur de sorte que le troisième échangeur de chaleur reçoit le flux ayant transité dans le second échangeur de chaleur
- le premier échangeur de chaleur et le troisième échangeur de chaleur sont logés dans un même boîtier d'échangeur en échange thermique avec au moins un flux de fluide caloporteur,
- le premier échangeur de chaleur et l'échangeur de chaleur de vaporisation sont logés dans un même boîtier d'échangeur en échange thermique avec au moins un flux de fluide caloporteur,
- le premier échangeur de chaleur, le troisième échangeur de chaleur et l'échangeur de chaleur de vaporisation sont logés dans un même boîtier d'échangeur en échange thermique avec au moins un flux de fluide caloporteur,
- le dispositif comporte un contrôleur électronique configuré pour commander tout ou partie de l'ensemble de vanne(s) du dispositif,
- le dispositif comprend une pile à combustible reliée au niveau de la seconde extrémité aval,
- le dispositif comporte un organe de limitation et/ou de régulation de débit entre l'ensemble de vanne(s) et la seconde extrémité aval.

L'invention concerne également un véhicule, notamment bateau comprenant un dispositif selon l'une quelconque des caractéristiques ci-dessus ou ci-dessous.

L'invention concerne également un procédé de fourniture de fluide à un organe utilisateur, au moyen d'un dispositif selon l'une quelconque des caractéristiques ci-dessus ou ci-dessous ou d'un véhicule précité, dans lequel l'organe utilisateur est reliée à la seconde extrémité du circuit de soutirage, le procédé comprenant une étape de fourniture de fluide du réservoir à l'organe utilisateur par soutirage de fluide liquéfié du réservoir via la première conduite de soutirage, le procédé étant caractérisé en ce que, préalablement à l'étape de fourniture de fluide, si la pression au sein du réservoir est inférieure à un seuil déterminée, le procédé comprend une étape de pressurisation du réservoir via le système de pressurisation du réservoir jusqu'à un niveau de pression déterminé.

L'invention peut concerner également tout dispositif ou procédé alternatif comprenant toute combinaison des caractéristiques ci-dessus ou ci-dessous dans le cadre des revendications.

D'autres particularités et avantages apparaîtront à la lecture de la description ci-après, faite en référence aux figures dans lesquelles :
[Fig.1] représente une vue schématique et partielle illustrant la structure et le fonctionnement d'un premier exemple de réalisation de l'invention,
[Fig.2] représente une vue schématique et partielle illustrant la structure et le fonctionnement d'un deuxième exemple de réalisation de l'invention.

Le dispositif 1 de stockage et de fourniture de fluide illustré peut être un dispositif embarqué sur un véhicule (bateau ou autre) pour le stockage et de fourniture d'hydrogène à un organe utilisateur tel qu'une pile à combustible ou un moteur par exemple.

Le dispositif 1 comprend un réservoir 2 cryogénique de stockage de fluide liquéfié, par exemple un réservoir à deux parois espacées avec isolation sous vide entre les deux parois.

Le dispositif possède un circuit de soutirage comprenant une première conduite 3 de soutirage comprenant une première extrémité 13 amont reliée à la partie supérieure du réservoir 2 et une seconde extrémité 23 aval destinée à être reliée à un organe utilisateur.

La première conduite 3 de soutirage comprend un premier échangeur 4 de chaleur de réchauffage situé en dehors du réservoir 2 et un second échangeur 5 de chaleur de réchauffage situé à l'intérieur du réservoir 2, de préférence dans la partie liquide, c'est-à-dire en partie inférieure.

Le circuit de soutirage comprend un ensemble de vanne(s) 6 configuré pour assurer le passage d'un flux de fluide circulant de la première 13 extrémité vers la seconde 23 extrémité en passant dans le premier échangeur 4 de chaleur puis dans le second échangeur 5 de chaleur ou en passant uniquement dans le premier échangeur 4 de chaleur.

C'est-à-dire que le circuit de soutirage comporte une conduite dans laquelle le premier échangeur 4 de chaleur et le second échangeur 5 de chaleur sont disposés en série entre les première 13 et seconde extrémité 23 et une portion de dérivation reliant la sortie du premier échangeur 4 de chaleur à la seconde extrémité 23 sans passer par le second échangeur 5 de chaleur.

L'ensemble de vanne(s) 6 comprend par exemple une vanne à trois voies reliées respectivement à une sortie du premier échangeur 4 de chaleur, à une entrée du second échangeur 5 de chaleur et à la seconde 23 extrémité via une portion 7 de dérivation assurant un bypass du second échangeur 5 de chaleur. La vanne 6 à trois voies peut être du type proportionnel (avec, par exemple, une partie du fluide est dirigée vers le second échangeur 5 de chaleur). Bien entendu, tout autre type de vanne(s) peut être envisagé pour assurer le routage ou la répartition des flux de fluide. Par exemple, la vanne trois voies peut être remplacée par deux vannes deux voies disposées respectivement dans la conduite alimentant le second échangeur 5 et la conduite 7 de dérivation.

Comme illustré, le circuit de soutirage peut comporter un troisième échangeur 12 de chaleur disposé en série en aval du second échangeur 5 de chaleur de sorte que le troisième échangeur 12 de chaleur reçoit le flux ayant transité dans le premier échangeur 4 de chaleur puis dans le second échangeur 5 de chaleur. Une vanne 17 de contrôle et/ou de sécurité est de préférence prévue en aval du troisième échangeur 12 de chaleur au niveau de la seconde extrémité 23 (en amont de l'organe 123 utilisateur). Un capteur de température et/ou de pression peut être prévu également à la sortie de cet échangeur 12 de chaleur (de même, un capteur de pression peut être prévu au niveau 20 de la première extrémité 13 du circuit de soutirage).

Ainsi, l'ensemble de vanne(s) 6 permet de soutirer du gaz du réservoir 2 qui est mis en circulation dans le premier 4 échangeur de chaleur puis dans le second 5 échangeur de chaleur et ensuite dans le troisième échangeur 12 de chaleur avant la seconde extrémité 23. Alternativement, l'ensemble 6 de vanne(s) permet de soutirer du gaz du réservoir 2 qui est mis en circulation uniquement dans le premier 4 échangeur de chaleur avant d'arriver à la seconde extrémité 23. A noter qu'un organe 21 de limitation et/ou de régulation de débit est de préférence prévu dans le circuit aval de l'ensemble de vanne(s) (6) et la seconde extrémité (23) aval, dans la portion 7 de dérivation du troisième échangeur 12 de chaleur.

Cet organe, qui peut être par exemple un orifice calibré, permet de compenser les pertes de charge dans le ou les échangeurs de chaleur 5 et 12 notamment.

Le premier échangeur 4 de chaleur et le troisième échangeur 12 de chaleur peuvent être logés dans un même boîtier 15 d'échangeurs en échange thermique avec au moins un flux 14 de fluide caloporteur (eau ou tout autre fluide).

Comme illustré, de préférence, un dispositif 18 de sécurité à clapet de surpression est prévu au niveau de la première extrémité 13 pour évacuer du réservoir 2 d'éventuelles surpressions.

Le dispositif 1 comprend en outre un système de pressurisation du réservoir 2 comprenant une conduite 8 de pressurisation distincte du circuit de soutirage et comprenant deux extrémités reliées respectivement aux parties supérieure et inférieure du réservoir 2, un échangeur 9 de chaleur de vaporisation et un ensemble de vanne(s) 10, 11 configuré pour permettre le soutirage de liquide du réservoir 2, son réchauffage dans l'échangeur 9 de chaleur de vaporisation et sa réintroduction dans le réservoir 2. Par exemple deux vannes sont disposées de part et d'autre de l'échangeur 9 de chaleur de vaporisation.

Ainsi, ce système de mise en pression auxiliaire permet la pressurisation initiale du réservoir et notamment le démarrage d'une pile à combustible reliée à la seconde extrémité 23, ceci sans utiliser le circuit de soutirage.

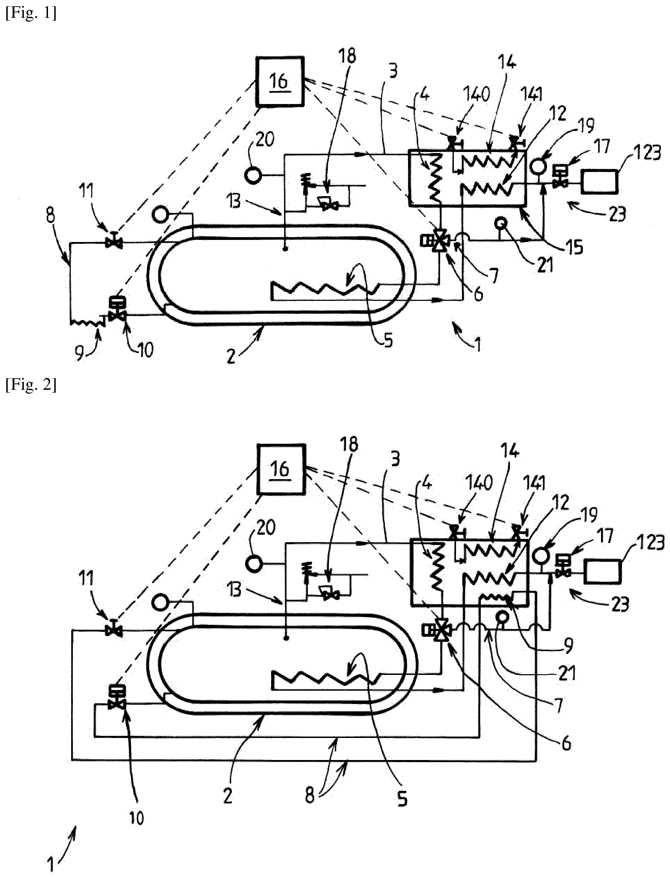

Le mode de réalisation de la [Fig.2] se distingue de celui de la [Fig.1] en ce que l'échangeur 9 de chaleur de vaporisation est logés dans le même boîtier 15 d'échangeurs que le premier échangeur 4 de chaleur (et le cas échéant le troisième échangeur 12 de chaleur) et en échange thermique avec au moins un flux 14 de fluide caloporteur (via par exemple un circuit muni de vanne(s) 140, 141).

Dans ce cas, pour vaporiser le liquide dans l'échangeur 9 de chaleur de vaporisation ce dernier peut être mis en échange thermique avec un fluide plus chaud, de l'air, ou en faisant circuler de l'eau chaude dans au moins un flux 14 de fluide caloporteur.

A noter que, contrairement à la représentation schématique, de préférence ce même boîtier 15 d'échangeurs est disposé en dessous du réservoir 2.

Un fonctionnement possible du dispositif pour alimenter en fluide un organe 123 utilisateur va à présent être décrit.

Lorsque la pression dans le réservoir 2 est inférieure à un seuil déterminé, la vanne 6 trois voies peut être configurée pour faire transiter le fluide soutiré du réservoir 2 (et réchauffé dans le premier échangeur 4 de chaleur) dans le second échangeur 5 de chaleur (pour fournir des calories dans le réservoir 2 et donc augmenter sa pression). Ce fluide est ensuite réchauffé à nouveau dans le troisième échangeur 12 de chaleur avant d'être fourni à l'organe 123 utilisateur.

Lorsque la pression dans le réservoir est supérieure à un niveau déterminé, la vanne 6 trois voies peut être configurée pour faire transiter le fluide soutiré du réservoir 2 (et réchauffé dans le premier échangeur 4 de chaleur) sans passer par le second échangeur de chaleur situé dans le réservoir 2 vers l'utilisateur 123 (via de préférence un organe 21 de limitation de débit).Dans ce mode, les phases liquides et gazeuses peuvent être maintenues en équilibre thermodynamique, à la même température. Ainsi, en régime permanent, le gaz soutiré dans le réservoir 2 provient de l'évaporation de liquide engendré par le second échangeur 5 de chaleur. Ce gaz ayant bullé à travers le liquide présent dans le réservoir, il est à l'équilibre thermodynamique avec le liquide. La pression du réservoir 2 est donc fixée par la température du liquide et du gaz. Ce mode d'opération permet donc d'avoir un réservoir 2 dans lequel le liquide est à la température d'équilibre avec le gaz. Dans ce cas, si le réservoir est secoué, le mélange de la phase liquide et gaz n'influe pas sur sa pression car ils sont à la même température.

Comme illustré, un contrôleur 16 électronique (comprenant un microprocesseur et/ou un ordinateur) peut être prévu et configuré pour commander tout ou partie de l'ensemble de vanne(s) du dispositif.

Ce soutirage au niveau de la partie gazeuse est plus avantageux qu'un soutirage liquide car il permet un meilleur renouvellement de la phase gazeuse. De plus, il limite le gradient thermique de cette phase, et par conséquent minimise l'écart à l'équilibre entre le liquide et les vapeurs des phases.

Le dispositif permet donc un contrôle de la pression du réservoir 2 avec un soutirage gazeux et une boucle de recirculation interne dans la phase liquide le cas échéant. Le dispositif peut être mobile et notamment peut subir des rotations par rapport aux trois axes (Oxyz) supérieures à cinq degrés° et des accélérations selon ces axes qui sont supérieures à 0,5 g (qui peuvent causer des mélanges liquide/gaz entraînant potentiellement des instabilités de pression dans les dispositifs de l'art antérieur).

Le dispositif peut être embarqué dans un bateau, avion, camion au niveau d'un poste fixe ou en mode d'utilisation « plein contre vide ».

Le dispositif 1 possède avantageusement un réchauffeur 9 de mise en pression auxiliaire permettant la pressurisation initiale du réservoir et le démarrage de la pile sans soutirage de fluide (avant le mode de fonctionnement de soutirage permanent décrit ci-dessus).

Ainsi, de préférence uniquement pour assurer un démarrage la mise en pression du réservoir 2 est réalisée par le système de pressurisation distinct du circuit de soutirage.

## Revendications

1. Dispositif de stockage et de fourniture de fluide, notamment dispositif embarqué de stockage et de fourniture d'hydrogène à un organe utilisateur, comprenant un réservoir (2) cryogénique de stockage de fluide liquéfié, un circuit de soutirage comprenant une première conduite (3) de soutirage ayant une première extrémité (13) amont reliée à la partie supérieure du réservoir (2) et une seconde extrémité (23) aval destinée à être reliée à un organe utilisateur, la première conduite (3) de soutirage comprenant un premier échangeur (4) de chaleur de réchauffage situé en dehors du réservoir (2) et un second échangeur (5) de chaleur de réchauffage situé à l'intérieur du réservoir (2), le circuit de soutirage comprenant un ensemble de vanne (s) (6) configuré pour assurer le passage d'un flux de fluide circulant de la première (13) extrémité vers la seconde (23) extrémité en passant dans le premier échangeur (4) de chaleur puis dans le second échangeur (5) de chaleur ou en passant uniquement dans le premier échangeur (4) de chaleur sans passer dans le second échangeur (5) de chaleur, **caractérisé en ce que** le dispositif (1) comprend en outre un système de pressurisation du réservoir (2) comprenant une conduite (8) de pressurisation distincte du circuit de soutirage et comprenant deux extrémités reliées respectivement aux parties supérieure et inférieure du réservoir (2), un échangeur (9) de chaleur de vaporisation et un ensemble de vanne(s) (10, 11) configuré pour permettre le soutirage de liquide du réservoir (2), son réchauffage dans l'échangeur (9) de chaleur de vaporisation et sa réintroduction dans le réservoir (2), et **en ce que** le premier échangeur (4) de chaleur et l'échangeur (9) de chaleur de vaporisation sont logés dans un même boîtier (15) d'échangeur en échange thermique avec au moins un flux (14) de fluide caloporteur.

2. Dispositif selon la revendication 1, **caractérisé en ce que** de l'ensemble de vanne(s) (6) comprend une vanne à trois voies reliées respectivement à une sortie du premier échangeur (4) de chaleur, à une entrée du second échangeur (5) de chaleur et à la seconde (23) extrémité via une portion (7) du circuit de soutirage de bypass du second échangeur (5) de chaleur.

3. Dispositif selon la revendication 1 ou 2, **caractérisé en ce que** le circuit de soutirage comporte un troisième échangeur (12) de chaleur disposé en série en aval du second échangeur (5) de chaleur de sorte que le troisième échangeur (12) de chaleur reçoit le flux ayant transité dans le second échangeur (5) de chaleur.

4. Dispositif selon la revendication 3, **caractérisé en ce que** le premier échangeur (4) de chaleur et le troisième échangeur (12) de chaleur sont logés dans un même boîtier (15) d'échangeur en échange thermique avec au moins un flux (14) de fluide caloporteur.

5. Dispositif selon la revendication 4, **caractérisé en ce que** le troisième échangeur (12) de chaleur est également logé dans le même boîtier (15) d'échangeur thermique et en échange thermique avec le au moins flux (14) de fluide caloporteur.

6. Dispositif selon l'une quelconque des revendications 1 à 5, **caractérisé en ce qu'**il comporte un contrôleur (16) électronique configuré pour commander tout ou partie de l'ensemble de vanne(s) du dispositif.

7. Dispositif selon l'une quelconque des revendications 1 à 6 comprenant une pile à combustible (123) reliée au niveau de la seconde extrémité (23) aval.

8. Dispositif selon l'une quelconque des revendications 1 à 7, **caractérisé en ce qu'**il comporte un organe (21) de limitation et/ou de régulation de débit entre l'ensemble de vanne(s) (6) et la seconde extrémité (23) aval.

9. Véhicule, notamment bateau comprenant un dispositif selon l'une quelconque des revendications 1 à 8.

10. Procédé de fourniture de fluide à un organe (123) utilisateur, au moyen d'un dispositif selon l'une quelconque des revendications 1 à 9 ou d'un véhicule selon la revendication 10, dans lequel l'organe utilisateur (123) est reliée à la seconde (23) extrémité du circuit de soutirage, le procédé comprenant une étape de fourniture de fluide du réservoir (2) à l'organe (123) utilisateur par soutirage de fluide liquéfié du réservoir via la première conduite (3) de soutirage, le procédé étant **caractérisé en ce que**, préalablement à l'étape de fourniture de fluide, si la pression au sein du réservoir (2) est inférieure à un seuil déterminée, le procédé comprend une étape de pressurisation du réservoir (2) via le système de pressurisation du réservoir (2) jusqu'à un niveau de pression déterminé.

## Patentansprüche

1. Vorrichtung zum Speichern und Zuführen von Fluid, insbesondere in einem Fahrzeug befindliche Vorrichtung zum Speichern und Zuführen von Wasserstoff zu einem Verbraucherorgan, mit einem kryogenen Behälter (2) zum Speichern von verflüssigtem Fluid, einem Entnahmekreislauf mit einer ersten Entnahmeleitung (3), die ein erstes vorgelagertes Ende (13), das mit dem oberen Teil des Behälters (2) verbunden ist, und ein zweites nachgelagertes Ende (23) aufweist, das dazu bestimmt ist, mit einem Verbraucherorgan verbunden zu werden, wobei die erste Entnahmeleitung (3) einen ersten außerhalb des Behälters (2) angeordneten Wärmetauscher (4) zum Erwärmen und einen zweiten innerhalb des Behälters (2) angeordneten Wärmetauscher (5) zum Erwärmen aufweist, wobei der Entnahmekreislauf eine Ventilanordnung (6) aufweist, die so konfiguriert ist, dass sie den Durchfluss eines Fluids vom ersten Ende (13) zum zweiten Ende (23) gewährleistet, indem dieses durch den ersten Wärmetauscher (4) und dann durch den zweiten Wärmetauscher (5) oder nur durch den ersten Wärmetauscher (4) ohne Durchfluss durch den zweiten Wärmetauscher (5) strömt, **dadurch gekennzeichnet, dass** die Vorrichtung (1) außerdem ein Druckbeaufschlagungssystem für den Behälter (2) aufweist, das eine vom Entnahmekreislauf getrennte Druckbeaufschlagungsleitung (8) mit zwei Enden aufweist, die jeweils mit dem oberen und unteren Teil des Behälters (2) verbunden sind, einen Verdampfungswärmetauscher (9) und eine Ventilanordnung (10, 11), die so konfiguriert ist, dass sie die Entnahme von Flüssigkeit aus dem Behälter (2), die Erwärmung im Verdampfungswärmetauscher (9) und die Rückführung in den Behälter (2) ermöglicht, und dass der erste Wärmetauscher (4) und der Verdampfungswärmetauscher (9) in einem gemeinsamen Wärmetauschergehäuse (15) untergebracht sind, das mit mindestens einem Wärmeträgerfluidstrom (14) in Wärmeaustausch steht.

2. Vorrichtung nach Anspruch 1, **dadurch gekennzeichnet, dass** die Ventilanordnung (6) ein Dreiwegeventil aufweist, das jeweils mit einem Ausgang des ersten Wärmetauschers (4), einem Eingang des zweiten Wärmetauschers (5) und dem zweiten Ende (23) über einen Abschnitt (7) des Bypass-Entnahmekreislaufs des zweiten Wärmetauschers (5) verbunden ist.

3. Vorrichtung nach Anspruch 1 oder 2, **dadurch gekennzeichnet, dass** der Entnahmekreislauf einen dritten Wärmetauscher (12) aufweist, der in Reihe hinter dem zweiten Wärmetauscher (5) angeordnet ist, sodass der dritte Wärmetauscher (12) den Fluss aufnimmt, der den zweiten Wärmetauscher (5) durchlaufen hat.

4. Vorrichtung nach Anspruch 3, **dadurch gekennzeichnet, dass** der erste Wärmetauscher (4) und der dritte Wärmetauscher (12) in einem gemeinsamen Wärmetauschergehäuse (15) untergebracht sind, das mit mindestens einem Wärmeträgerfluidstrom (14) in Wärmeaustausch steht.

5. Vorrichtung nach Anspruch 4, **dadurch gekennzeichnet, dass** der dritte Wärmetauscher (12) ebenfalls in demselben Wärmetauschergehäuse (15) untergebracht ist und in Wärmeaustausch mit dem mindestens einen Wärmeträgerfluidstrom (14) steht.

6. Vorrichtung nach einem der Ansprüche 1 bis 5, **dadurch gekennzeichnet, dass** sie eine elektronische Steuereinheit (16) aufweist, die so konfiguriert ist, dass sie die gesamte Ventilanordnung der Vorrichtung oder einen Teil davon steuert.

7. Vorrichtung nach einem der Ansprüche 1 bis 6 einschließlich einer Brennstoffzelle (123), die am zweiten nachgelagerten Ende (23) angeschlossen ist.

8. Vorrichtung nach einem der Ansprüche 1 bis 7, **dadurch gekennzeichnet, dass** sie ein Organ (21) zur Begrenzung und/oder Regulierung des Durchflusses zwischen der Ventilanordnung (6) und dem zweiten nachgelagerten Ende (23) aufweist.

9. Fahrzeug, insbesondere Boot, mit einer Vorrichtung nach einem der Ansprüche 1 bis 8.

10. Verfahren zum Zuführen von Fluid zu einem Verbraucherorgan (123) mittels einer Vorrichtung nach einem der Ansprüche 1 bis 9 oder einem Fahrzeug nach Anspruch 10, wobei das Verbraucherorgan (123) mit dem zweiten Ende (23) des Entnahmekreislaufs verbunden ist, wobei das Verfahren einen Schritt zum Zuführen von Fluid aus dem Behälter (2) zum Verbraucherorgan (123) durch Entnehmen von verflüssigtem Fluid aus dem Behälter über die erste Entnahmeleitung (3) aufweist, wobei das Verfahren **dadurch gekennzeichnet ist, dass** vor dem Schritt des Zuführens von Fluid, wenn der Druck im Behälter (2) unter einem bestimmten Schwellenwert liegt, das Verfahren einen Schritt der Druckbeaufschlagung des Behälters (2) über das Druckbeaufschlagungssystem des Behälters (2) auf einen bestimmten Druckwert aufweist.

## Claims

1. Fluid storage and supply device, in particular an on-board device for storing hydrogen and supplying it to a user member, comprising a cryogenic tank (2) for storing liquefied fluid, a withdrawal circuit comprising a first withdrawal line (3) having a first, upstream end (13) connected to the upper part of the tank (2) and a second, downstream end (23) intended to be connected to a user member, the first withdrawal line (3) comprising a first heating heat exchanger (4) located outside the tank (2) and a second heating heat exchanger (5) located inside the tank (2), the withdrawal circuit comprising an assembly of one or more valves (6) that is configured to ensure the passage of a flow of fluid circulating from the first end (13) to the second end (23), in the process entering the first heat exchanger (4) and then the second heat exchanger (5) or in the process entering solely the first heat exchanger (4) without entering the second heat exchanger (5), **characterized in that** the device (1) moreover comprises a system for pressurizing the tank (2), comprising a pressurization line (8) separate from the withdrawal circuit and comprising two ends connected respectively to the upper part and the lower part of the tank (2), a vaporization heat exchanger (9) and an assembly of one or more valves (10, 11) that is configured to allow liquid to be withdrawn from the tank (2), to be heated in the vaporization heat exchanger (9) and to be reintroduced into the tank (2), and **in that** the first heat exchanger (4) and the vaporization heat exchanger (9) are housed in one and the same exchanger housing (15) in a heat-exchange relationship with at least one flow (14) of heat-transfer fluid.

2. Device according to Claim 1, **characterized in that** the assembly (6) of one or more valves comprises a three-way valve, the ports of which are connected respectively to an outlet of the first heat exchanger (4), to an inlet of the second heat exchanger (5), and to the second end (23) via a portion (7) of the withdrawal circuit bypassing the second heat exchanger (5).

3. Device according to Claim 1 or 2, **characterized in that** the withdrawal circuit has a third heat exchanger (12) disposed in series downstream of the second heat exchanger (5) such that the third heat exchanger (12) receives the flow that has passed into the second heat exchanger (5).

4. Device according to Claim 3, **characterized in that** the first heat exchanger (4) and the third heat exchanger (12) are housed in one and the same exchanger housing (15) in a heat-exchange relationship with at least one flow (14) of heat-transfer fluid.

5. Device according to Claim 4, **characterized in that** the third heat exchanger (12) is also housed in the same heat exchanger housing (15) and in a heat-exchange relationship with the at least one flow (14) of heat-transfer fluid.

6. Device according to any one of Claims 1 to 5, **characterized in that** it has an electronic controller (16) configured to control all or some of the assembly of one or more valves of the device.

7. Device according to any one of Claims 1 to 6, comprising a fuel cell (123) connected at the second, downstream end (23).

8. Device according to any one of Claims 1 to 7, **characterized in that** it comprises a flow rate limiting and/or regulating member (21) between the assembly of one or more valves (6) and the second, downstream end (23).

9. Vehicle, in particular a boat, comprising a device according to any one of Claims 1 to 8.

10. Method for supplying fluid to a user member (123), by means of a device according to any one of Claims 1 to 9 or a vehicle according to Claim 10, wherein the user member (123) is connected to the second end (23) of the withdrawal circuit, the method comprising a step of supplying fluid from the tank (2) to the user member (123) by withdrawing liquefied fluid from the tank via the first withdrawal line (3), the method being **characterized in that**, prior to the fluid supplying step, if the pressure within the tank (2) is less than a determined threshold, the method comprises a step of pressurizing the tank (2) via the system for pressurizing the tank (2) up to a determined pressure level.
